# EUROPÄISCHE PATENTANMELDUNG

(11) **EP 0 942 613 A2**
(43) Veröffentlichungstag der Anmeldung: **15.09.1999**
(21) Anmeldenummer: 99440047.1
(22) Anmeldetag: 05.03.1999
(51) Int. Cl.: H04Q 3/00, H04M 3/50

(54) **Verfahren zur Verwaltung von Telekommunikationsdienst-Daten eines Teilnehmers sowie den zugehörigen Server und die zugehörige Vermittlungsstelle**

(30) Priorität: 13.03.1998 DE 19810869
(71) Anmelder: ALCATEL, 75008 Paris (FR)
(72) Erfinder: Kaiser, Bernhard, Dr., 71665 Vaihingen/Enz (DE); Uebele, Roland, 73614 Schorndorf (DE)
(74) Vertreter: Brose, Gerhard, Dipl.-Ing.

(57) **Zusammenfassung**

Die vorliegende Erfindung betrifft ein Verfahren zur Verwaltung von Telekommunikationsdienst-Daten eines Teilnehmers, die in einer Vermittlungsstelle (EX1) gespeichert sind, sowie Server (SER) und eine Vermittlungsstelle (EX1) hierfür. Dabei stellt ein Datenendgerät (DT) des Teilnehmers eine Verbindung über ein On-Line-Datennetzwerk (ODN) zu der Vermittlungsstelle (EX1) her, sendet das Datenendgerät (DT) an die Vermittlungsstelle (EX1) einen Zugangswunsch des Teilnehmers zu der Vermittlungsstelle, empfängt die Vermittlungsstelle (EX1) den Zugangswunsch, bearbeiten die Vermittlungsstelle (EX1) und das Datenendgerät (DT) die Daten durch Interaktion, bei der die Vermittlungsstelle (EX1) die Daten an das Datenendgerät (DT) ausgibt und das Datenendgerät (DT) die Daten zumindest dann an die Vermittlungsstelle (EX1) sendet, wenn an dem Datenendgerät (DT) eine Datenänderung vorgegeben wurde. Abschließend speichert die Vermittlungsstelle (EX1) geänderte Daten und das Datenendgerät (DT) oder die Vermittlungsstelle (EX1) beenden die Verbindung über das On-Line-Datennetzwerk (ODN) zu der Vermittlungsstelle (EX1).

## Beschreibung

Die vorliegende Erfindung betrifft ein Verfahren zur Verwaltung von Telekommunikationsdienst-Daten eines Teilnehmers, die in einer Vermittlungsstelle gespeichert sind, sowie Server gemäß dem Oberbegriff des Anspruchs 6 hierfür und eine Vermittlungsstelle gemäß dem Oberbegriff des Anspruchs 9 hierfür.

Durch die fortschreitende Entwicklung bieten Telekommunikationsnetze den Nutzern von Telekommunikationsdiensten immer weitergehende Komfortfunktionen an. Viele dieser Funktionen werden von Intelligenten Netzen erbracht. Als Stichwort sei z.B. das sogenannte Virtual Private Network (VPN) genannt, bei dem innerhalb eines öffentlichen Netzes ein privates logisches Netzwerk gebildet wird. Dieses logische Netzwerk stellt sich für die Teilnehmer an diesem Netzwerk wie ein homogenes privates Netzwerk dar, ebenso erscheint es nach außen hin für alle nicht in das private logische Netzwerk eingebundene Teilnehmer als ein homogenes privates Netzwerk. Die Funktionen innerhalb eines Intelligenten Netzes werden im wesentlichen durch sogenannte Service Switching Points (SSP) und Service Control Points (SCP) erbracht. Beispielsweise wird bei einem Ruf, der für ein VPN der oben erwähnten Art bestimmt ist, ein SSP in einem ersten Schritt den Ruf anhand seiner speziell gekennzeichneten Rufnummer als einen allgemein für das Intelligente Netz bestimmten Ruf erkennen und sich die erforderlichen Daten für einen weiteren Rufaufbau bei einem ihm zugeordneten SCP erfragen. Der SCP liefert dann in einem zweiten Schritt z.B. die Informationen, daß der Ruf an ein VPN gerichtet ist und daß anstatt der speziell gekennzeichneten Rufnummer, die eine logische Rufnummer ist, eine tatsächliche Rufnummer eines Teilnehmeranschlusses zum weiteren Rufaufbau verwendet werden muß. Die für die Erbringung des obengenannten VPN-Dienst notwendigen Daten sind also zentral im SCP vorhanden und werden von verschiedenen SSPs abgerufen. Diese Daten können direkt an dem SCP oder z.B. auch von einem Personal Computer aus geändert werden, der auch örtlich weit entfernt von dem SCP aufgestellt sein kann und über eine Datenleitung, z.B. über eine Leitung eines lSDN-Telekommunikationsnetzes, mit dem SCP verbunden ist.

Andere Komfortdienste in Telekommunikationsnetzen sind z.B. verschiedene Formen der Rufumleitung, jeweils unter bestimmten Bedingungen. So wird z.B. beim sogenannten Call Forwarding Busy (CFB) ein Ruf nur dann an eine andere Rufnummer weitergeleitet, wenn die ursprünglich gewählte Rufnummer gerade besetzt ist. Bei einem sogenannten Call Forwarding Unconditional (CFU) wird ein Ruf ohne eine Vorbedingung an eine andere Rufnummer weitergeleitet. Solche Dienste sind insbesondere ISDN-Netzen gebräuchlich und durch einheitliche Standards definiert. Die Daten, die für einen solchen Dienst erforderlich sind, z.B. eine Rufnummer an die weitergeleitet werden soll, werden im allgemeinen nicht zentral abgelegt, wie in dem vorigen Beispiel in einem SCP, sondern dezentral jeweils in der Ortsvermittlungsstelle, über die der den Dienst in Anspruch nehmende Teilnehmer mit dem Telekommunikationsnetz verbunden ist. So kann ein Ruf zunächst an diese Ortsvermittlungsstelle geleitet werden, die dann anhand ihrer lokal gespeicherten Daten den Ruf je nach Einstellung an den Teilnehmeranschluß weiterleiten oder an eine vorbestimmte Rufnummer umleiten kann.

Die Daten für die letztgenannten Dienste können von dem Teilnehmer selbst geändert werden. Der Teilnehmer wählt dann an seinem Telefon eine Zugangskennziffer, mit der er Zugriff zu seinen persönlichen Daten bekommt, und gibt dann gegebenenfalls Datenänderungen an, z.B. schaltet er eine Rufumleitung aktiv oder nimmt sie außer Betrieb. Der Komfort bei der Datenänderung und der Umfang der Datenänderungsmöglichkeiten sind durch die begrenzten Bedienmöglichkeiten an einem Telefon, nämlich Spracheingabe, Sprachausgabe und Eingabe über Tastatur - an manchen Telefonen auch Anzeige von Daten an einem Display - stark eingeschränkt. Außerdem sinkt durch die mangelhafte Wartbarkeit der persönlichen Daten die Bereitschaft der Teilnehmer, solche Dienste überhaupt in Anspruch zu nehmen, und die Fehlerquote bei der Bedienung ist nicht unbeträchtlich.

Aufgabe der Erfindung ist es, Telekommunikationsdienst-Daten, die in einer Vermittlungsstelle gespeichert sind, auf komfortable Weise für eine Änderung zugänglich zu machen.

Diese Aufgabe wird durch ein Verfahren gemäß der technischen Lehre des Anspruchs 1, einen Server gemäß der technischen Lehre des Anspruchs 6, einen Server gemäß der technischen Lehre des Anspruchs 7 und eine Vermittlungsstelle gemäß der technischen Lehre des Anspruchs 9 gelöst. Weitere vorteilhafte Ausgestaltungen der Erfindung sind den abhängigen Ansprüchen und der Beschreibung zu entnehmen.

Im folgenden werden die Erfindung und ihre Vorteile anhand von Ausführungsbeispielen unter Zuhilfenahme der Zeichnungen dargestellt.
- Figur 1: zeigt eine Anordnung zur Ausführung des erfindungsgemäßen Verfahrens aus einem Endgerät TER, einer erfindungsgemäßen Vermittlungsstelle EX1 und einem Datenendgerät DT.
- Figur 2: zeigt eine bevorzugte Weiterbildung der Anordnung aus Figur 1 zur Ausführung des erfindungsgemäßen Verfahrens aus einem Endgerät TER, drei erfindungsgemäßen Vermittlungsstellen EX1, EX2 und EX3, einem erfindungsgemäßen Server SER und einem Datenendgerät DT.

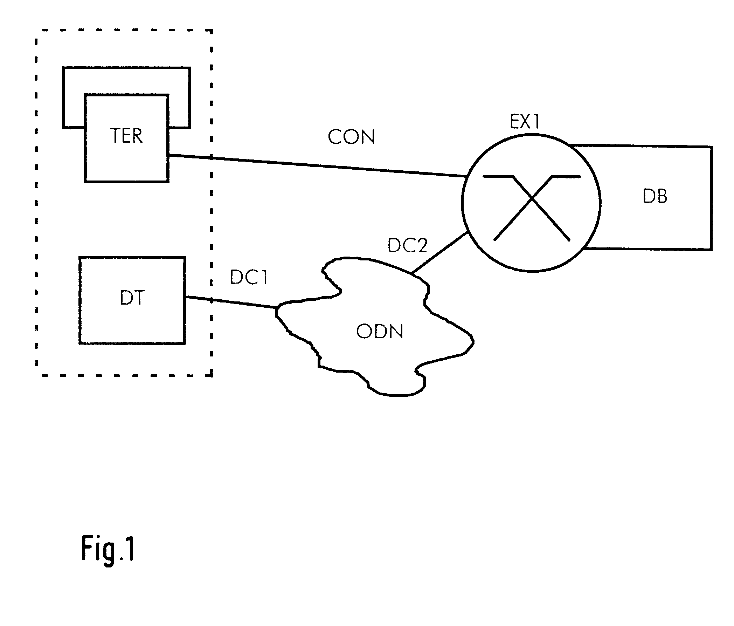

In Figur 1 ist eine Anordnung gezeigt, in der das erfindungsgemäße Verfahren angewendet werden kann. Ein Endgerät TER ist über eine Verbindung CON mit der Vermittlungsstelle EX1 verbunden. Bei dem Endgerät TER kann es sich um einen Telefonapparat, ein Faxgerät oder auch um ein anderes mit einem Telefonnetz zusammenarbeitendes Gerät handeln. Die Verbindung CON kann über weitere, in der Figur 1 nicht dargestellte Einrichtungen führen, z.B. über eine Vorfeldeinrichtung und über weitere Vermittlungsstellen. Die Vermittlungsstelle EX1 enthält eine Speichereinrichtung DB, in der Daten speicherbar sind, die für die Erbringung von Telekommunikationsdiensten für das Endgerät TER erforderlich sind. Mit Hilfe dieser Daten kann die Vermittlungsstelle EX1 z.B. einen Ruf, der für das Endgerät TER bestimmt ist, an einen anderen Teilnehmeranschluß umleiten. Die Vermittlungsstelle EX1 kann die Funktionen einer Ortsvermittlungsstelle übernehmen. Es ist aber auch möglich, daß die Vermittlungsstelle EX1 zentrale Funktionen für nachgeschaltete, in Figur 1 nicht dargestellte Vermittlungsstellen übernimmt, die z.B. auf der Verbindung CON liegen können.

Weiterhin zeigt Figur 1 ein Datenendgerät DT, das über eine Verbindung DC1 mit einem On-Line-Datennetzwerk ODN verbunden ist. Das On-Line-Datennetzwerk ODN seinerseits ist über die Verbindung DC2 mit der Vermittlungsstelle EX1 verbunden. Ein typisches Beispiel für das On-Line-Datennetzwerk ODN ist das Internet. Es kommen jedoch auch Abwandlungen und Weiterentwicklungen des Internets oder andere Formen von Datennetzwerken in Frage, z.B. ein Intranet. Da Datennetzwerke im allgemeinen nicht leitungsvermittelt sondern paketvermittelt arbeiten, kann möglicherweise bei der Datenübertragung zwischen zwei Nutzern des Datennetzwerkes ein merklicher Zeitverzug eintreten. Weil die genannten beiden Nutzer jedoch über eine gedachte Verbindung, eine virtuelle Verbindung des Datennetzwerkes miteinander verbunden sind, stellt das Daten netzwerk eine On-Line-Verbindung zwischen den beiden Nutzern her, wenn auch bisweilen ein Zeitverzug eintritt. Als Datenendgerät DT kann ein Personal Computer eingesetzt werden, der über eine Schnittstelleneinrichtung verfügt, mit der ein Zugang zu dem On-Line-Datennetzwerk ODN möglich ist. Die Verbindung DC1 zu dem On-Line-Datennetzwerk ODN kann z.B. als eine Telefonverbindung über ein Telefonnetz zu einem in Figur 1 nicht dargestellten Zugangsrechner aufgebaut werden, der als Schnittstelle zwischen dem Telefonnetz und dem On-Line-Datennetzwerk ODN dient. Das Datenendgerät DT kann dann Daten z.B. über ein Modem oder eine ISDN-Schnittstellenkarte auf der Verbindung DC1 mit dem On-Line-Datennetzwerk ODN austauschen. Ein Modem wird eingesetzt, wenn die Verbindung DC1 nur analoge Übertragung zuläßt, eine ISDN-Schnittstellenkarte, wenn die Verbindung DC1 die Übertragung von digitalen ISDN-Datenpaketen erlaubt. Wenn das On-Line-Datennetzwerk ODN das Internet ist, ist der Aufbau der Verbindung DC1 mit Hilfe eines Personal Computers und einer geeigneten Schnittstellensoftware allgemein bekannt.

Das Endgerät TER und das Daten-Endgerät DT können sich an unterschiedlichen Orten befinden. Durch einen stirchpunktierten Kasten ist jedoch angedeutet, daß das Datenendgerät DT und das Endgerät TER in dem Beispiel in Figur 1 gemeinsam an einem Ort aufgestellt sind. Es ist auch möglich, daß das Datenendgerät DT ein Kombinationsgerät ist, das die Verbindung DC1 mit dem On-Line-Datennetzwerk ODN aufbauen kann und weiterhin die Funktionen eines Telefonapparates leisten kann. Ein solches Kombinationsgerät kann sowohl die Funktionen des Datenendgerätes DT als auch die Funktionen des Endgerätes TER erbringen. Ein solches Kombinationsgerät kann dann z.B. über die Verbindung CON sowohl die Teilfunktionen des Endgerätes TER wie auch die Teilfunktionen des Datenendgerätes DT erbringen, indem z.B. die Vermittlungsstelle EX1 eine Verbindung zu dem On-Line-Datennetzwerk ODN herstellt oder indem die On-Line-Datennetzwerk-Schnittstelle der Verbindung DC2 an der Vermittlungsstelle EX1 auch von der Verbindung CON aus angesprochen werden kann.

Um ausgehend von der Verbindung DC1 eine vollständige Verbindung bis zu der Vermittlungsstelle EX1 aufzubauen, gibt das Datenendgerät DT dem On-Line-Datennetzwerk ODN eine Adresse der Vermittlungsstelle EX1 an. Wenn das On-Line-Datennetzwerk ODN das Internet ist, kann diese Adresse z.B. eine sogenannte URL-Adresse sein (Uniform Resource Locator), mit der es mit den im Internet gebräuchlichen Mitteln möglich ist, von dem Datenendgerät DT aus über das On-Line-Datennetzwerk ODN eine Verbindung zu einer Eingangsschnittstelle, einer sogenannten Homepage, der Vermittlungsstelle EX1 aufzubauen. Das On-Line-Datennetzwerk ODN baut dann die vollständige Verbindung bis zu der Vermittlungsstelle EX1 einschließlich der Verbindung DC2 auf. Anschließend sendet das Datenendgerät DT an die Vermittlungsstelle EX1 einen Zugangswunsch zu den Telekommunikationsdienst-Daten, mit denen die Vermittlungsstelle EX1 die Telekommunikationsdienstleistungen für das Endgerät TER erbringen kann. Als Zugangswunsch kann z.B. die Teilnehmernummer gesendet werden, die dem Teilnehmeranschluß des Endgerätes TER zugeordnet ist.

Vorteilhafterweise prüft die Vermittlungsstelle EX1 den Zugangswunsch und stellt dabei fest, ob sie den Zugang zu den Telekommunikationsdienst-Daten des Teilnehmeranschlusses gewähren kann. Z.B. kann in Verbindung mit dem Zugangswunsch eine persönliche Identifikationsnummer, eine sogenannte Personal Identifikation Number (PIN), von dem Datenendgerät DT an die Vermittlungsstelle EX1 gesendet werden. Nur wenn die an dem Datenendgerät DT eingegebene PIN mit einer von der Vermittlungsstelle EX1 im Zusammenhang mit dem Zugangswunsch erwarteten PIN übereinstimmt, erlaubt die Vermittlungsstelle EX1 den Zugriff zu den Telekommunikationsdienst-Daten. So ist sichergestellt, daß nur ein dazu berechtigter Teilnehmer oder Vertreter des Teilnehmers auf die Telekommunikationsdienst-Daten zugreifen können. Es kann aber auch vorbestimmt sein, daß allein schon die Angabe der Teilnehmernummer des Teilnehmeranschlusses genügt, um einen Zugang zu den Telekommunikationsdienst-Daten zu erhalten. Die letztere Variante kann z.B. dann gewählt werden, wenn die Telekommunikationsdienst-Daten nur gelesen, aber nicht geändert werden sollen oder wenn die Telekommunikationsdienst-Daten ohnehin nur in einem sehr eingeschränktem Maße modifizierbar sind.

Ist der Zugang zu den Telekommunikationsdienst-Daten nicht gewährbar, meldet dies die Vermittlungsstelle EX1 an das Datenendgerät DT. Dann kann entweder an dem Datenendgerät DT ein erneuter Zugang mit einer geänderten Zugangskennung, z.B. mit einer anderen PIN, versucht werden, oder die Verbindung der Vermittlungsstelle EX1 mit dem Datenendgerät DT wird abgebaut.

Wenn der Teilnehmer mit dem Datenendgerät DT Zugang zu seinen Telekommunikationsdienst-Daten erhalten hat, bearbeiten die Vermittlungsstelle EX1 und das Datenendgerät DT die Telekommunikationsdienst-Daten interaktiv. Dabei sendet die Vermittlungsstelle EX1 Telekommunikationsdienst-Daten an das Datenendgerät DT, das diese Daten dann auf einem Ausgabemedium, z.B. einem Bildschirm oder einem Lautsprecher ausgeben kann. Werden an dem Datenendgerät DT die ausgegebenen Daten mit Hilfe eines Eingabemediums, z.B. einer Tastatur, modifiziert, so sendet das Datenendgerät DT die geänderten Daten an die Vermittlungsstelle EX1. Die Vermittlungsstelle EX1 speichert die geänderten Daten in ihrer Speichereinrichtung DB. Es liegt aber auch im Rahmen der Erfindung, daß die Daten von dem Datenendgerät DT nur gelesen werden und nicht geändert werden.

Mit Hilfe der Telekommunikationsdienst-Daten können Einstellungen von Telekommunikationsdiensten verändert werden. Dabei werden z.B. zusätzliche Telekommunikationsdienste angefordert oder bei bereits gebuchten Telekommunikationsdiensten die Betriebsparameter verändert. So ist es z.B. möglich, verschiedene Formen der Rufumleitung zu buchen, wie das eingangs erwähnte Call Forwarding Busy (CFB) oder das Call Forwarding Unconditional (CFU). Es kann auch eine Gebührenanzeige für das Endgerät TER bei der Vermittlungsstelle EX1 abgerufen oder eine sogenannte MCID (Malicious Call lDentification) veranlaßt werden, bei der böswillige Anrufe ermittelt werden. Diese Dienste sind zwar insbesondere in ISDN-Telekommunikationsnetzen gebräuchlich, können aber auch in anderen Telekommunikationsnetzarten erbracht werden. Andere, hier nicht genannte Dienste sind ebenfalls an der Vermittlungsstelle EX1 buchbar.

Wenn ein solcher Dienst bereits gebucht ist, können von dem Datenendgerät DT aus die Betriebsparameter für diese Dienste an aktuelle Bedürfnisse angepaßt werden, indem z.B. bei der obengenannten Rufumleitung angegeben wird, an welche Rufnummer ein Ruf umgeleitet werden soll und wie die Bedingungen für die Rufumleitung lauten, z.B. daß ein Ruf erst dann weitergeleitet werden soll, wenn an dem ursprünglich von einem Anrufer angewählten Endgerät TER nach dreimaligem oder fünfmaligem Rufzeichen der Ruf nicht entgegengenommen wurde.

Vorteilhafterweise sendet das Datenendgerät DT nur zulässig geänderte Daten an die Vermittlungsstelle EX1, indem das Datenendgerät DT vor dem Senden prüft, ob die Datenänderung zulässig ist. Die Vermittlungsstelle EX1 ihrerseits kann ebenfalls die ihr gesendeten Daten auf Plausibilität prüfen und nur solche Daten in der Speichereinrichtung DB einspeichern, die der Plausibilitätsprüfung standhalten. Größtmögliche Sicherheit wird jedoch erreicht, wenn sowohl die Vermittlungsstelle EX1 als auch das Datenendgerät DT eine Datenprüfung vornehmen.

Nachdem die Datenänderungen oder auch nur eine Dateneinsicht erfolgreich vorgenommen wurde, beendet das Datenendgerät DT die Verbindung mit der Vermittlungsstelle EX1. Die Verbindung kann jedoch auch von der Vermittlungsstelle EX1 ihrerseits abgebaut werden, z.B. wenn an dem Datenendgerät DT über längere Zeit keine Eingabe erfolgt, so daß Verbindungskapazität der Vermittlungsstelle EX1 durch die ungenutzte Verbindung zu dem Datenendgerät DT unnötig lange blockiert wird und deshalb eine Zeitüberwachung in der Vermittlungsstelle EX1 den Verbindungsabbau veranlaßt.

Bei der interaktiven Bearbeitung der Telekommunikationsdienst-Daten kann die Vermittlungsstelle EX1 lediglich Telekommunikationsdienst-Daten als solche an das Datenendgerät DT senden, die dann durch das Datenendgerät DT interpretiert und für einen Bediener des Datenendgerät DT in einem Bildschirmmenü dargestellt werden. In umgekehrter Richtung sendet dann das Datenendgerät DT nur die bereits erwähnte Zugangskennung und PIN, Anforderungen für Telekommunikationsdienst-Daten, Bedienereingaben oder modifizierte Telekommunikationsdienst-Daten an die Vermittlungsstelle EX1. Für die Interpretation empfangener Telekommunikationsdienst-Daten, die Darstellung in Bildschirmmenüs und gegebenenfalls für die Prüfung an dem Datenendgerät DT eingegebener Daten sorgt in diesem Fall das Datenendgerät DT mit Hilfe einer auf einem Speichermedium des Datenendgerätes DT dauerhaft installierten und von dort abrufbaren Software. Es ist aber auch möglich, daß die Vermittlungsstelle EX1 und das Datenendgerät DT mit zusätzlichen Interpretationshinweisen angereicherte Telekommunikationsdienst-Daten austauschen. Dann sendet die Vermittlungsstelle EX1 die Telekommunikationsdienst-Daten z.B. zusammen mit einer zusätzlichen Anweisung zum Bildschirmaufbau oder einer zusätzlichen Anweisung zur akustischen Ausgabe der Daten an das Datenendgerät DT. So wird die Form der Ausgabe an dem Datenendgerät DT unmittelbar von der Vermittlungsstelle EX1 gesteuert und sowohl Änderungen als auch Erweiterungen der Ausgabeform können zentral von der Vermittlungsstelle EX1 ausgehen und sind nicht mehr abhängig von einer auf einem Speichermedium des Datenendgerätes DT fest installierten Software. Das Datenendgerät DT verfügt dann lediglich über Auswertemittel, um die von der Vermittlungsstelle EX1 gesendeten Anweisungen zu interpretieren.

Wenn das On-Line-Datennetzwerk ODN das Internet ist, kann für den letztgenannten Austausch von erweiterten Daten zwischen der Vermittlungsstelle EX1 und dem Datenendgerät DT die Beschreibungssprache HyperText Markup Language (HTML) verwendet werden. Die Vermittlungsstelle EX1 sendet dann an das Datenendgerät DT sogenannte HTML-Dokumente, die aus einer Folge von ASCII-Zeichen bestehen (American Standard Code for Information Interchange) und von dem Datenendgerät DT mittels eines speziellen Auswerteprogrammes, eines sogenannten Browsers gelesen und interpretiert werden. Die Syntax der HTML-Dokumente ist genau festgelegt und erlaubt es, z.B. die Art der schriftlichen Darstellungen von Bildschirmseiten oder auch ganze akustische Sequenzen mit der HTML-Beschreibungssprache zu beschreiben. Das Datenendgerät DT kann auf Eingabefeldern einer Bildschirmseite empfangene Telekommunikationsdienst-Daten editieren, so daß der Bediener des Datenendgerätes DT die angezeigten Daten modifizieren und das Datenendgerät DT die geänderten Daten an die Vermittlungsstelle EX1 zurücksenden kann.

Als Weiterentwicklung der Beschreibungsmöglichkeiten von Informationen mit HTML-Dokumenten bietet die Sprache JAVA erweiterte Möglichkeiten für die Ausgabe von Daten und insbesondere für deren interaktive Modifikation. Bei Verwendung von JAVA versendet die Vermittlungsstelle EX1 einen aus einem compilierten Quelltext erzeugten Zwischencode, ein sogenanntes JAVA-Applet an das Datenendgerät DT, das dieses mit einem JAVA-Interpreter in Maschinencode übersetzt und anschließend das so erzeugte Maschinencode-Programm ausführt, d.h. Bildsequenzen, Akustiksequenzen oder Eingabemasken für Telekommunikationsdienst-Daten erzeugt. Da in die JAVA-Applets auch Kommunikationsmittel der Internetprotokoll-Familie TCP/lP (Transmission Control Protocol / Internet Protocol) integriert werden können, wird die Rücksendung von modifizierten oder unmodifizierten Telekommunikationsdienst-Daten oder auch von Steuerkommandos von dem Datenendgerät DT an die Vermittlungsstelle EX1 wesentlich erleichtert.

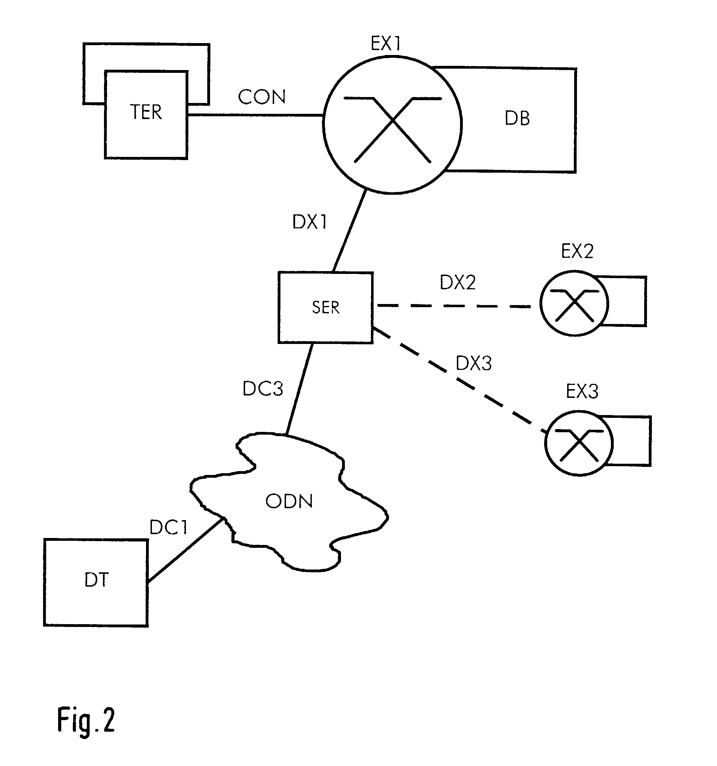

Eine bevorzugte Weiterbildung des erfindungsgemäßen Verfahrens ist in Figur 2 dargestellt. Figur 2 zeigt zum einen im Zusammenhang mit Figur 1 bereits beschriebene Komponenten, nämlich das Datenendgerät DT verbunden über die Verbindung DC1 mit dem On-Line-Datennetzwerk ODN und das Endgerät TER verbunden über die Verbindung CON mit der Vermittlungsstelle EX1. Zum andern sind zusätzlich eine Vermittlungsstelle EX2, eine Vermittlungsstelle EX3 und ein Server SER dargestellt, der Zugang von Teilnehmern zu ihren Telekommunikationsdienst-Daten ermöglicht, die in den Vermittlungsstellen EX1, EX2 und EX3 sowie in weiteren in der Figur 2 nicht dargestellten ähnlichen Vermittlungsstellen gespeichert sind.

Aus Gründen einer übersichtliche Darstellung sind das Endgerät TER und das Datenendgerät DT in Figur 2 nicht wie in Figur 1 gemeinsam, sondern an unterschiedlichen Orten angeordnet. Durch diese Art der Darstellung wird auch deutlich, daß die im folgenden noch erläuterte Wartung der Telekommunikationsdienst-Daten in den Vermittlungsstellen EX1, EX2 und EX3 mit Hilfe des Datenendgerätes DT von verschiedenen Orten aus möglich ist.

Wenn der Teilnehmer an dem Datenendgerät DT einen Zugangswunsch zu seinen Telekommunikationsdienst-Daten eingibt, so wird das Datenendgerät DT zunächst eine Verbindung DC1 mit dem On-Line-Datennetzwerk ODN aufbauen und dann über das On-Line-Datennetzwerk ODN und die Verbindung DC3 mit dem Server SER verbunden. Nachdem der Server SER den Zugangswunsch empfangen hat, stellt der Server SER fest, in welcher der Vermittlungsstellen EX1, EX2 oder EX3 die Telekommunikationsdienst-Daten des Teilnehmers gespeichert sind. Dazu wertet der Server SER z.B. eine im Zusammenhang mit dem Zugangswunsch angegebene Teilnehmernummer des Teilnehmers aus und ermittelt diejenige der Vermittlungsstellen EX1, EX2 oder EX3, in deren Bereich der Teilnehmeranschluß mit der angegebenen Teilnehmernummer liegt. Im folgenden wird davon ausgegangen, daß die Telekommunikationsdienst-Daten in der Vermittlungsstelle EX1 gespeichert sind, zu denen von dem Datenendgerät DT aus Zugang erwünscht ist. Der Server SER baut deshalb die Verbindung DX1 zu der Vermittlungsstelle EX1 auf. Die Verbindung DX1 kann z.B. eine Datenleitung eines lSDN-Telekommunikationsnetzes sein. Die Verbindung DX1 kann aber auch über ein On-Line-Datennetzwerk führen, z.B. über das On-Line-Datennetzwerk ODN, welches das Internet sein kann. Zur klareren Veranschaulichung der Verbindungsbeziehungen in Figur 2 wurde jedoch auf eine Darstellung der letztgenannten Ausführungsform verzichtet. In ähnlicher Weise könnte der Server SER auch mit den Vermittlungsstellen EX2 und EX3 über die Verbindungen DX2 beziehungsweise DX3 verbunden werden.

Es ist auch bei der Ausführungsform in Figur 2 vorteilhaft, wenn vor dem eigentlichen Zugang des Teilnehmers zu den Telekommunikationsdienst-Daten geprüft wird, ob der Teilnehmer zu einem solchen Zugang berechtigt ist. Ein Beispiel einer solchen Zugangsprüfung wurde bereits im Zusammenhang mit Figur 1 beschrieben. In ähnlicher Weise kann auch in Figur 2 die Vermittlungsstelle EX1 die Zugangsberechtigung des Teilnehmers prüfen, nachdem der Server SER die Verbindung DX1 hergestellt hat. Es ist aber auch möglich, daß der Server SER in zentraler Funktion für die Vermittlungsstellen EX1, EX2 und EX3 die Zugangsberechtigung des Teilnehmers prüft und bei vorhandener Zugangsberechtigung des Teilnehmers die von dem Zugangswunsch des Teilnehmers betroffene Vermittlungsstelle auswählt und eine der Verbindungen DX1 , DX2 oder DX3 aufbaut. Weiterhin kann der Server SER zusammen mit der Vermittlungsstelle EX1 die Zugangsberechtigung kontrollieren, indem der Server SER z.B. eine von dem Datenendgerät DT empfangene PIN mit einer von der Vermittlungsstelle EX1 abgefragten PIN vergleicht.

Nachdem die Verbindung zwischen dem Datenendgerät DT und der Vermittlungsstelle EX1 über den Server SER aufgebaut ist, können die Telekommunikationsdienst-Daten an dem Datenendgerät DT interaktiv mit der Vermittlungsstelle EX1 bearbeitet werden, wie schon anhand Figur 1 erläutert wurde. Der Server SER ist dann für die zwischen dem Datenendgerät DT und der Vermittlungsstelle EX1 ausgetauschten Daten lediglich ein transparentes Übertragungsmedium.

Vorteilhafterweise kann der Server SER jedoch auch weitergehende Funktionen übernehmen, wenn er bei der Vermittlungsstelle EX1 die aktuellen Telekommunikationsdienst-Daten erfragt und diese für die Ausgabe an einem Ausgabemedium des Datenendgerät DT aufbereitet. Der Server SER kann z.B. von der Vermittlungsstelle EX1 empfangene unbearbeitete Daten mit Hilfe der erwähnten HTML-Beschreibungssprache oder mit Hilfe von JAVA-Applets in die Beschreibung einer Bildschirmseite einbetten, d.h. zu den Daten erläuternde Texte hinzufügen und die Daten in einer an dem Datenendgerät DT editierbaren Form darstellen. Auf diese Weise benötigen weder die Vermittlungsstelle EX1 noch die Vermittlungsstellen EX2 und EX3 Mittel zur Datenaufbereitung in einer Beschreibungssprache, und die Menge der auf der Verbindung DX1 übertragenen Daten sinkt. Weiterhin kann der Server SER von dem Datenendgerät DT modifizierte und von dort empfangene Telekommunikationsdienst-Daten auf Plausibilität prüfen und nur solche Daten zur Einspeicherung an die Vermittlungsstelle EX1 senden, die der Plausibilitätprüfung standgehalten haben. So wird die Vermittlungsstelle EX1 von der Plausibilitätprüfung entlastet.

## Patentansprüche

1. Verfahren zur Verwaltung von Telekommunikationsdienst-Daten eines Teilnehmers, die in einer Vermittlungsstelle (EX1) gespeichert sind, mit den Schritten:
- ein Datenendgerät (DT) des Teilnehmers stellt eine Verbindung über ein On-Line-Datennetzwerk (ODN) zu der Vermittlungsstelle (EX1) her,
- das Datenendgerät (DT) sendet an die Vermittlungsstelle (EX1) einen Zugangswunsch des Teilnehmers zu der Vermittlungsstelle (EX1),
- die Vermittlungsstelle (EX1) empfängt den Zugangswunsch,
- die Vermittlungsstelle (EX1) und das Datenendgerät (DT) bearbeiten die Daten durch Interaktion, bei der die Vermittlungsstelle (EX1) die Daten an das Datenendgerät (DT) ausgibt und das Datenendgerät (DT) Daten zumindest dann an die Vermittlungsstelle (EX1) sendet, wenn an dem Datenendgerät (DT) eine Datenänderung vorgegeben wurde,
- die Vermittlungsstelle (EX1) speichert geänderte Daten und
- das Datenendgerät (DT) oder die Vermittlungsstelle (EX1) beenden die Verbindung über das On-Line-Datennetzwerk (ODN) zu der Vermittlungsstelle (EX1).

2. Verfahren nach Anspruch 1, dadurch gekennzeichnet, daß vor dem Bearbeiten der Daten der Zugangswunsch überprüft und festgestellt wird, ob der Teilnehmer eine Zugangsberechtigung zu den Daten besitzt.

3. Verfahren nach Anspruch 1, dadurch gekennzeichnet, daß die Telekommunikationsdienst-Daten Einstellungen, z.B. Buchungen oder Änderungen, von Telekommunikationsdiensten betreffen.

4. Verfahren nach Anspruch 1, dadurch gekennzeichnet, daß als On-Line-Datennetzwerk (ODN) das Internet verwendet wird.

5. Verfahren nach Anspruch 1, dadurch gekennzeichnet, daß die Verbindung zwischen der Vermittlungsstelle (EX1) und dem Datenendgerät (DT) von einem Server (SER) hergestellt wird, der die Vermittlungsstelle (EX1) aus einer Vielzahl von Vermittlungsstellen (EX1, EX2, EX3) als betroffen auswählt, indem der Server (SER) feststellt, in welcher der Vermittlungsstellen (EX1, EX2, EX3) die Telekommunikationsdienst-Daten des Teilnehmers gespeichert sind.

6. Server (SER), der mit einer Vielzahl von Vermittlungsstellen (EX1, EX2, EX3), in denen jeweils Telekommunikationsdienst-Daten von Teilnehmern gespeichert sind, verbindbar ist oder verbunden ist und der mit einem Datenendgerät (DT) eines Teilnehmers über ein On-Line-Datennetzwerk (ODN) verbindbar ist oder verbunden ist, **dadurch gekennzeichnet,** daß der Server (SER) Mittel aufweist, um bei einem von dem Datenendgerät (DT) gesendeten Zugangswunsch des Teilnehmers zu Telekommunikationsdienst-Daten, die in einer der Vermittlungsstellen (EX1, EX2, EX3) gespeichert sind, eine Verbindung zu derjenigen (EX1) der Vermittlungsstellen (EX1, EX2, EX3) aufzubauen, in der die Telekommunikationsdienst-Daten des Teilnehmers gespeichert sind, daß der Server (SER) Mittel aufweist, den Zugangswunsch zu überprüfen und festzustellen, ob der Teilnehmer eine Zugangsberechtigung zu den Daten besitzt, daß der Server (SER) Mittel aufweist, Daten von der Vermittlungsstelle (EX1) zu empfangen und an das Datenendgerät (DT) weiterzuleiten, daß der Server (SER) Mittel aufweist, Daten von dem Datenendgerät (DT) zu empfangen und zumindest dann an die Vermittlungsstelle (EX1) weiterzuleiten, wenn die Daten an dem Datenendgerät (DT) geändert wurden.

7. Server (SER) nach dem Oberbegriff des Anspruchs 6, **dadurch gekennzeichnet,** daß der Server (SER) Mittel aufweist, um bei einem von dem Datenendgerät (DT) gesendeten Zugangswunsch des Teilnehmers zu Telekommunikationsdienst-Daten, die in einer der Vermittlungsstellen (EX1, EX2, EX3) gespeichert sind, eine Verbindung zu derjenigen (EX1) der Vermittlungsstellen (EX1, EX2, EX3) aufzubauen, in der die Telekommunikationsdienst-Daten des Teilnehmers gespeichert sind, daß der Server (SER) Mittel aufweist, Daten von der Vermittlungsstelle (EX1) zu erfragen, daß der Server (SER) Mittel aufweist, Daten an das Datenendgerät (DT) auszugeben, daß der Server (SER) Mittel aufweist, Daten von dem Datenendgerät (DT) zu empfangen, und daß der Server (SER) Mittel aufweist, Daten zumindest dann an die Vermittlungsstelle (EX1) zu senden, wenn an dem Datenendgerät (DT) eine Datenänderung vorgegeben wurde.

8. Server (SER) nach Anspruch 7, dadurch gekennzeichnet, daß der Server (SER) Mittel aufweist, um den Zugangswunsch zu überprüfen und festzustellen, ob der Teilnehmer eine Zugangsberechtigung zu den Daten besitzt.

9. Vermittlungsstelle, in der Telekommunikationsdienst-Daten eines Teilnehmers, gespeichert sind und die mit einem Datenendgerät (DT) eines Teilnehmers über ein On-Line-Datennetzwerk (ODN) verbindbar ist, **dadurch gekennzeichnet,** daß die Vermittlungsstelle (EX1) Mittel aufweist, einen von dem Datenendgerät (DT) gesendeten Zugangswunsch des Teilnehmers zu Telekommunikationsdienst-Daten zu empfangen, daß die Vermittlungsstelle (EX1) Mittel aufweist, Daten an das Datenendgerät (DT) auszugeben, daß die Vermittlungsstelle (EX1) Mittel aufweist, Daten von dem Datenendgerät (DT) zu empfangen, und daß die Vermittlungsstelle (EX1) Mittel aufweist, Daten zumindest dann zu speichern, wenn an dem Datenendgerät (DT) eine Datenänderung vorgegeben wurde.
